## Europäisches Patentamt
## European Patent Office
## Office européen des brevets

(19)

(11) Veröffentlichungsnummer: **0 149 046**
**B1**

(12)

# EUROPÄISCHE PATENTSCHRIFT

(45) Veröffentlichungstag der Patentschrift:
29.06.88

(21) Anmeldenummer: 84113644.3

(22) Anmeldetag: 12.11.84

(51) Int. Cl.⁴: **H 02 H 11/00**, H 02 H 7/08

(54) Anordnung zur Beeinflussung eines Schaltgerätes.

(30) Priorität: 27.12.83 DE 3347209

(43) Veröffentlichungstag der Anmeldung:
24.07.85 Patentblatt 85/30

(45) Bekanntmachung des Hinweises auf die Patenterteilung:
29.06.88 Patentblatt 88/26

(84) Benannte Vertragsstaaten:
CH DE FR IT LI SE

(56) Entgegenhaltungen:
FR-A-1 420 279
GB-A-1 035 328

IEEE TRANSACTIONS ON INDUSTRY
APPLICATIONS, Band IA-17, Nr. 1, Januar/Februar
1981, Seiten 58-62, IEEE, New York, US; E.B.
TURNER u.a.: "Microprocessor-based universal
motor protection system"

(73) Patentinhaber: Siemens Aktiengesellschaft Berlin
und München, Wittelsbacherplatz 2, D-8000
München 2 (DE)

(72) Erfinder: Dörfler, Rudolf, Dipl.- Ing., Am Ruhstein
36, D-8520 Erlangen (DE)
Erfinder: Moerman, Boudewijn, Am tiefen Weg 8,
D-8524 Dormitz (DE)
Erfinder: Voigt, Rolf, Schuckertstrasse 14, D-8000
München 70 (DE)
Erfinder: Krause, Kurt, Klaushagerweg 9b, D-1000
Berlin 28 (DE)
Erfinder: Schnabel, Rudolf, Dipl.- Ing.,
Schwarzmannstrasse 12, D-8501 Fürth (DE)
Erfinder: Weidner, Georg, Egererstrasse 42, D-8450
Amberg (DE)
Erfinder: Kummerow, Gerd, Dr., Hagenplatz 3C,
D-1000 Berlin 33 (DE)
Erfinder: Schröther, Gerhard, Dipl.- Ing.,
Hegnerstrasse 12, D-8450 Amberg (DE)
Erfinder: Zentgraf, Lothar, Dipl.- Ing., Waldstrasse
18, D-8525 Uttenreuth (DE)

## Beschreibung

Die Erfindung bezieht sich auf eine Anordnung zur Beeinflussung eines fernbetätigten Schaltgerätes in einem Mehrphasennetz in Abhängigkeit von Netzzustandsdaten mittels einer Impedanzmeßeinrichtung, bestehend aus einer Meßspannungsquelle, zumindest einem Stromsensor und einer Schaltvorrichtung und wobei bei nicht eingeschaltetem Zustand des Schaltgerätes die Schaltvorrichtung die Meßspannung aus der Meßspannungsquelle in Reihe mit dem Stromsensor und zwischen die nicht eingechalteten Phasen des Netzes und Erde schaltet, der Stromsensor die Impedanz der nicht eingeschalteten Phasen gegen Erde erfaßt und einer Verarbeitungsstufe zuführt und die Verarbeitungsstufe beim Unterschreiten eines vorbestimmten Wertes der Impedanz gegen Erde das Schaltgerät im nicht eingeschalteten Zustand blockiert.

Bei einer bekannten Anordnung der obengenannten Art (GB-A-1 035 328) ist zwar die Erfassung von Erdschlüssen in elektrischen Geräten möglich; das eigentliche Schaltgerät muß hier jedoch auch für eine Aufschaltung auf einen Kurzschluß dimensioniert werden.

Bei weiterhin bekannten Schaltgeräten werden die Netzzustandsdaten nach dem Einschalten des Schaltgerätes durch Strommessung in Form von Überstrom erfassenden Bimetall-Elementen und Kurzschlußstrom erfassenden magnetischen Auslösern aufgenommen und je nach vorbestimmter Größe die Auslösung des Schaltgerätes bewirkt. Demnach muß das Schaltgerät für das Ein- und Ausschalten von Kurzschlußströmen bemessen sein. Durch die Erfindung soll eine Möglichkeit geschaffen werden, die Schaltleistung des Schaltgerätes möglichst gering zu halten und damit das Schaltgerät kleiner und einfacher ausführen zu können. Diese Aufgabe wird dadurch gelöst, daß bei nicht eingeschaltetem Zustand des Schaltgerätes die Schaltvorrichtung ferner die Meßspannung aus der Meßspannungsquelle in Reihe mit dem Stromsensor zwischen den einzelnen nicht eingeschalteten Phasen umschaltet, der Stromsensor die Impedanzen zwischen den einzelnen nicht eingeschalteten Phasen erfaßt und der Verarbeitungsstufe zuführt und die Verarbeitungsstufe beim Unterschreiten eines vorbestimmten Wertes der Impedanz zwischen den einzelnen Phasen das Schaltgerät im nicht eingeschalteten Zustand blockiert.

Praktisch ohne Mehraufwand ergibt sich die erfindungsgemäße Anordnung, wenn bei Zuordnung von Stromsensoren zu jeder Phase die Stromsensoren zur Erfassung der Überlast- und/oder Kurzschluß- und/oder Betriebsströme mitbenutzt sind, da hierdurch die üblichen Bimetall- und magnetischen Kurzschlußauslöser entfallen können. Man kann die Stromsensoren zusätzlich auch zur Anzeige der Betriebsströme mitbenutzen. Weiter ist es von Vorteil, wenn die Stromsensoren zur Erfassung von Überschwingungen mitbenutzt sind. Um feststellen zu können, aus welchem Grund die Einschaltung blockiert oder die Ausschaltung erfolgte, ist es vorteilhaft, wenn die Verarbeitungsstufe Ausgänge für Betriebszustandsanzeigen hat. Um diese Erfassung möglichst schnell durchführen zu können ist es weiterhin von Vorteil, wenn die Verarbeitungsstufe Teil eines Mikroprozessors oder Mikrocomputers ist.

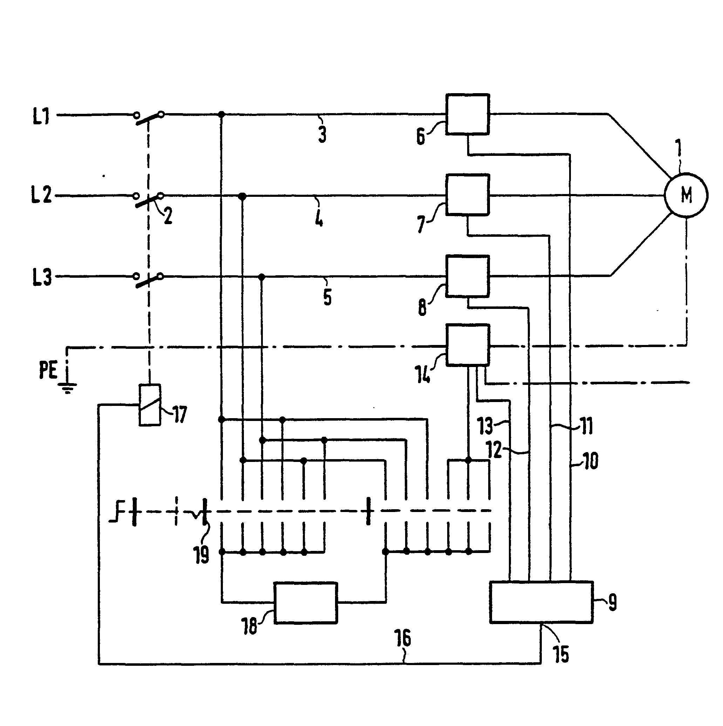

Anhand der Zeichnung wird ein Ausführungsbeispiel gemäß der Erfindung schematisch dargestellt.

An die Phasen L1, L2, L3 ist ein Drehstrommotor 1 angeschlossen, der über das elektromagnetische Schaltgerät 2 ein- oder ausgeschaltet wird. In den Zuleitungen 3, 4, 5 zum Motor 1 sind Stromsensoren 6, 7, 8 eingeschaltet, wie sie an sich bekannt sind. Die gemessenen Stromwerte werden einer Verarbeitungsstufe 9, beispielsweise einer an sich bekannten Vergleichsschaltung, über die Leitungen 10, 11, 12 und 13 zugeführt. Die Leitung 13 ist mit dem Stromsensor 14 in Verbindung gebracht, der die Neutralleiter N bsw. Schutzleiter PE gegenüber den Phasen überprüft. Der Ausgang 15 ist über die Leitung 16 an die Betätigungsspule 17 des elektromagnetischen Schaltgerätes angeschlossen und kann so, je nach Ausgangsbefehl, das Einschalten des elektromagnetischen Schaltgerätes verhindern oder aber bei entsprechenden Stromwerten während des Betriebes das elektromagnetische Schaltgerät ausschalten. Zum Messen der Impedanz in den einzelnen Phasen L1, L2, L3 und der Phasen gegen den Schutzleiter PE wird eine definierte Meßspannung aus einer Meßspannungsquelle 18 über eine Schaltvorrichtung 19, die auch elektronischer Art sein kann, zyklusmäßig oder gleichzeitig an die Phasen angelegt und die Stromsensoren 6 bis 8 und 14 durch die Verarbeitungsstufe 9 entsprechend abgefragt. Werden hier dem entsprechenden Netz zugeordnete, vorbestimmbare Werte der Impedanzen unterschritten, d. h. liegen beispielsweise Kurzschlußbedingungen vor, so blockiert der Ausgang 15 über die Stufe 17 das elektromagnetische Schaltgerät 2. Während des Betriebes, d. h. nach Freigabe des elektromagnetischen Schaltgerätes 2 befindet sich die Schaltvorrichtung 19 in der gestrichelt dargestellten Lage, d. h. die Meßspannung 18 ist unwirksam und die Verbindung der Phasen untereinander ist aufgehoben, so können die Stromsensoren 6 bis 8 über die Verarbeitungsstufe 9 zur Erfassung von während des Betriebes auftretenden Überlast- oder Kurzschlußströmen oder auch Messung von Oberschwingungen herangezogen werden, so daß eine Mehrfachausnutzung der Stromsensoren möglich ist, was das Schaltgerät weiterhin vereinfacht. Da die Geräte nur noch das Kurzschlußausschaltvermögen besitzen müssen, können sie in ihrer Mechanik erheblich einfacher ausgeführt werden. Die Zahl der Betriebsstörungen wird erheblich vermindert, da alle Störungen, die bereits vor dem Einschalten erkannt werden, ohne Folgeschäden für die Anlage beseitigt werden können. Derartige Störungen können beispielsweise im Phasenbereich liegengebliebene Werkzeuge oder Schaltfehler sein.

**Patentansprüche**

1. Anordnung zur Beeinflussung eines fernbetätigten Schaltgerätes (2) in einem Mehrphasennetz (L1, L2, L3) in Abhängigkeit von Netzzustandsdaten, mittels einer Impedanzmeßeinrichtung, bestehend aus einer Meßspannungsquelle (18), zumindest einem Stromsensor (6 - 8, 14) und einer Schaltvorrichtung (19) und wobei bei nicht eingeschaltetem Zustand des Schaltgerätes (2) die Schaltvorrichtung (19) die Meßspannung aus der Meßspannungsquelle (18) in Reihe mit dem Stromsensor (14) und zwischen die nicht eingeschalteten Phasen (3, 4, 5) des Netzes und Erde (PE) schaltet, der Stromsensor (14) die Impedanz der nicht eingeschalteten Phasen (3, 4, 5) gegen Erde (PE) erfaßt und einer Verarbeitungsstufe (9) zuführt und die Verarbeitungsstufe (9) beim Unterschreiten eines vorbestimmten Wertes der Impedanz gegen Erde das Schaltgerät (2) im nicht eingeschalteten Zustand blockiert, dadurch gekennzeichnet, daß bei nicht eingeschaltetem Zustand des Schaltgerätes die Schaltvorrichtung ferner die Meßspannung aus der Meßspannungsquelle (18) in Reihe mit dem Stromsensor (6 - 8) zwischen den einzelnen nicht eingeschalteten Phasen (3, 4, 5) umschaltet, der Stromsensor (6 - 8) die Impedanzen zwischen den einzelnen nicht eingeschalteten Phasen (3, 4, 5) erfaßt und der Verarbeitungsstufe (9) zuführt und die Verarbeitungsstufe (9) beim Unterschreiten eines vorbestimmten Wertes der Impedanz zwischen den einzelnen Phasen (3, 4, 5) das Schaltgerät (2) im nicht eingeschalteten Zustand blockiert.

2. Anordnung nach Anspruch 1, dadurch gekennzeichnet, daß bei Zuordnung von Stromsensoren (6, 7, 8) zu jeder Phase (L1, L2, L3) die Stromsensoren zur Erfassung der Überlast- und/oder Kurzschluß- und/oder Betriebsströme mitbenutzt sind.

3. Anordnung nach Anspruch 1 oder 2, dadurch gekennzeichnet, daß die Stromsensoren (6, 7, 8, 14) zur Erfassung von Oberschwingungen mitbenutzt sind.

4. Anordnung nach einem der vorhergehenden Ansprüche, dadurch gekennzeichnet, daß die Verarbeitungsstufe (9) Ausgänge für Betriebszustandsanzeigen hat.

5. Anordnung nach einem der vorhergehenden Ansprüche, dadurch gekennzeichnet, daß die Verarbeitungsstufe (9) Teil eines Mikroprozessors oder Mikrocomputers ist.

**Claims**

1. Arrangement for controlling a remote-controlled switching device (2) in a polyphase network (L1, L2, L3) as a function of network status data, by means of an impedance measuring device consisting of a measuring voltage source (18), at least one current sensor (6 - 8, 14) and a switching arrangement (19), and in which case in the non-switched-on state of the switching device (2) the switching arrangement (19) switches the measuring voltage from the measuring voltage source (18) in series with the current sensor (14) and between the non-switched-on phases (3, 4, 5) of the network and earth (PE), the current sensor (14) detects the impedance of the non-switched-phases (3, 4, 5) to earth (PE) and feeds it to a processing stage (9), and the processing stage (9), in the event of a fall below a predetermined value of the impedance to earth, blocks the switching device (2) in the non-switched-on state, characterised in that in the non-switched-on state of the switching device the switching arrangement further switches over the measuring voltage from the measuring voltage source (18) in series with the current sensor (6 - 8) between the individual non-switched-on phases (3, 4, 5), the current sensor (6 - 8) detects the impedances between the individual non-switched-on phases (3, 4, 5) and feeds them to the processing stage (9) and the processing stage (9), in the event of a fall below a predetermined value of the impedance between the individual phases (3, 4, 5), blocks the switching device (2) in the non-switched-on state.

2. Arrangement according to claim 1, characterised in that with assignment of current sensors (6, 7, 8) to each phase (L1, L2, L3) the current sensors are also used to detect the overload and/or short-circuit and/or operating currents.

3. Arrangement according to claim 1 or 2, characterised in that the current sensors (6, 7, 8, 14) are also used to detect harmonic oscillations.

4. Arrangement according to one of the preceding claims, characterised in that the processing stage (9) has outputs for operating status indicators.

5. Arrangement according to one of the preceding claims, characterised in that the processing stage (9) is part of a microprocessor or microcomputer.

**Revendications**

1. Dispositif pour commander un appareil de coupure télécommandé (2) dans un réseau polyphasé (L1, L2, L3) en fonction des données de l'état du réseau, à l'aide d'un dispositif de mesure d'impédance constitué par une source de tension de mesure (16), au moins un détecteur de courant (6 - 8, 14) et un dispositif de commutation (19), et dans lequel, lorsque l'appareil de coupure (2) n'est pas branché, le dispositif de commutation (19) commute la tension de mesure délivrée par la source de tension de mesure (18) branchée en série avec le détecteur de courant (14) entre les phases mon branchées (3, 4, 5) du réseau et la terre (PE), le détecteur de courant (14) détecte l'impédance des phases non branchées (3, 4, 5) par rapport à la terre (PE) et l'envoie à un étage de traitement (9) et, lorsque l'impédance par rapport à la terre tombe au-dessous d'une valeur prédéterminée, l'étage de traitement (9) bloque l'appareil de coupure (2) à l'état non branché, caractérisé par le fait que, lorsque l'appareil de coupure est à l'état non branché, le dispositif de commutation commute en outre la tension de mesure délivrée par la source de tension de mesure (18) branchée en série avec le détecteur de courant (6 - 8) entre les différentes phases non branchées (3, 4, 5), le détecteur de courant (6 - 8) détecte les impédances entre les différentes phases non branchées (3, 4, 5) et les envoie à l'étage de traitement (9) et lorsque l'impédance entre les différentes phases (3, 4, 5) tombe au-dessous d'une valeur prédéterminée, l'étage de traitement (9) bloque l'appareil de coupure (2) à l'état non branché.

2. Dispositif suivant la revendication 1, caractérisé par le fait que dans le cas de l'association de détecteurs de courant (6, 7, 8) à chaque phase (L1, L2, L3), les détecteurs de courant sont utilisés simultanément pour détecter les courants de surcharge et/ou de courts-circuits et/ou de fonctionnement.

3. Dispositif suivant la revendication 1 ou 2, caractérisé par le fait que les détecteurs de courant (6, 7, 8, 14) sont utilisés pour détecter les oscillations harmoniques.

4. Dispositif suivant l'une des revendications précédentes, caractérisé par le fait que l'étage de traitement (9) possède des sorties pour des affichages de l'état de fonctionnement.

5. Dispositif suivant l'une des revendications précédentes, caractérisé par le fait que l'étage de traitement (9) fait partie d'un microprocesseur ou d'un microordinateur.